# EUROPÄISCHE PATENTANMELDUNG

(11) **EP 4 417 362 A1**
(43) Veröffentlichungstag der Anmeldung: **21.08.2024**
(21) Anmeldenummer: 23157232.2
(22) Anmeldetag: 17.02.2023
(51) Int. Cl.: B24B 7/06, B24B 21/00, B24B 29/00

(54) **VORRICHTUNG UND VERFAHREN ZUM ERKENNEN EINES BLECHBEARBEITUNGSMITTELS IN EINER BLECHBEARBEITUNGSMASCHINE**

(71) Anmelder: ARKU Maschinenbau GmbH, 76532 Baden-Baden (DE)
(72) Erfinder: Burtscher, Jacques, 67480 Roeschwoog (FR); Stolzer, Daniel, 76532 Baden-Baden (DE); Reith, Marcel, 76547 Sinzheim (DE)
(74) Vertreter: Durm Patentanwälte PartG mbB

(57) **Zusammenfassung**

Die vorliegende Erfindung betrifft eine Vorrichtung (16) zum Erkennen eines Blechbearbeitungsmittels (24a, 24b, 24c) in einer Blechbearbeitungsmaschine (14), mit: einer RFID-Einheit (36) zum Empfangen eines Lesesignals eines RFID-Lesers (18) mit Informationen zu einem RFID-Transponder (30a, 30b, 30c) an einem Blechbearbeitungsmittel an einer Blechbearbeitungsstation (20a, 20b, 20c) in der Blechbearbeitungsmaschine; einer Auswerteeinheit (38) zum Ermitteln von Blechbearbeitungsmitteldaten mit Informationen zu dem Blechbearbeitungsmittel basierend auf dem Lesesignal; und einer Maschinenschnittstelle (40) zum Ansteuern eines Maschinensystems (26) der Blechbearbeitungsmaschine basierend auf den Blechbearbeitungsmitteldaten. Die vorliegende Erfindung betrifft weiterhin ein System (10) ein Blechbearbeitungsmittel sowie ein Verfahren und ein Computerprogrammprodukt.

## Beschreibung

Die vorliegende Erfindung betrifft eine Vorrichtung und ein Verfahren zum Erkennen eines Blechbearbeitungsmittels in einer Blechbearbeitungsmaschine. Die vorliegende Erfindung betrifft weiterhin ein System zum Bearbeiten von Blech, ein Blechbearbeitungsmittel sowie ein Computerprogrammprodukt.

Beim Schneiden und Stanzen von Teilen aus Stahlblech bilden sich an den Schnittkanten und den Rändern von Löchern und Ausnehmungen störende Grate, die an der Ober- bzw. Unterseite des Stahlblechs überstehen. Insbesondere bei Teilen, die aus mehreren Zentimeter dickem Stahlblech hergestellt sind, bedarf es größeren technischen Aufwands, diese zu entgraten, also die Kanten zu verrunden und die Oberfläche abzuschleifen.

In DE 20 2020 107 308 U1 wird in diesem Zusammenhang eine Maschine zum Bearbeiten von Blechteilen offenbart. Die Maschine ist dazu ausgebildet, Blechteile in mehreren aufeinanderfolgenden Bearbeitungsschritten zu bearbeiten. Insbesondere wird ein Entgraten, ein Verrunden von Kanten sowie ein Schleifen der Oberfläche bereitgestellt. Die Maschine umfasst ein Maschinengestell sowie ein Transportband. Das Transportband ist zum Transportieren des zu bearbeitenden Blechteils in horizontaler Richtung von einem Aufgabetisch zu einem Ausgabetisch ausgebildet. Die Maschine umfasst weiterhin eine Mehrzahl von Bearbeitungseinheiten, die entlang des Transportbands in Durchlaufrichtung des Blechteils hintereinander angeordnet sind. Die Bearbeitungseinheiten umfassen ein Bürstenaggregat mit flexiblen Schleifbürsten und wenigstens ein Schleifbandaggregat mit einer quer zur Durchlaufrichtung angeordneten Kontaktwalze. Zudem umfasst die Maschine einen in dem Maschinengestell in vertikaler Richtung verfahrbar gelagerten Hilfsrahmen, auf dem das Schleifbandaggregat montiert ist. Zuletzt umfasst die Maschine eine zwischen dem Maschinengestell und dem Hilfsrahmen angeordnete Einstellvorrichtung zum Einstellen des Abstands zwischen dem Transportband und der Kontaktwalze des Schleifbandaggregats unabhängig von den übrigen Bearbeitungsstationen.

Bei derartigen Blechbearbeitungsmaschinen werden an verschiedenen Blechbearbeitungsstationen Bürsten, Schleifmittel, Werkzeuge und andere Blechbearbeitungsmittel eingesetzt, um das Blech zu bearbeiten. Eine Herausforderung liegt dabei zum einen in der Auswahl der passenden und geeigneten Werkzeuge sowie der für das gewünschte Ergebnis geeigneten Einstellungen und zum anderen in der initialen und laufenden Überprüfung, ob die Blechbearbeitungsmittel ihre gewünschte Funktion (noch) erfüllen. Oft ist hierzu der Maschinenbediener von zentraler Bedeutung. Durch dessen Erfahrungswerte und ggf. unter Einbeziehung von Vorgaben des Herstellers der Blechbearbeitungsmaschine werden Einstellungen und Blechbearbeitungsmittel gewählt. Diese Auswahl und Einstellungen werden üblicherweise basierend auf mehreren Durchläufen optimiert. Nachteilig ist in diesem Zusammenhang, dass dies zum einen zu ineffizienten Prozessen und ggf. suboptimalen Ergebnissen führt und dass zum anderen auch eine hohe Abhängigkeit vom Maschinenbediener und dessen Erfahrungen besteht.

Ausgehend hiervon stellt sich der vorliegenden Erfindung die Aufgabe, einen Ansatz zu einer effizienten Verwendung einer Blechbearbeitungsmaschine bei möglichst optimierten Bearbeitungsergebnissen bereitzustellen. Sowohl die Qualität der bereitgestellten Blechbearbeitung als auch die Effizienz bei der Bearbeitung, insbesondere im Hinblick auf eine Anzahl an notwendigen Durchläufen sowie einen Verbrauch an Betriebsmitteln, soll verbessert werden.

Zum Lösen dieser Aufgabe betrifft die vorliegende Erfindung in einem ersten Aspekt eine Vorrichtung zum Erkennen eines Blechbearbeitungsmittels in einer Blechbearbeitungsmaschine, mit:
- einer RFID-Einheit zum Empfangen eines Lesesignals eines RFID-Lesers mit Informationen zu einem RFID-Transponder an einem Blechbearbeitungsmittel an einer Blechbearbeitungsstation in der Blechbearbeitungsmaschine;
- einer Auswerteeinheit zum Ermitteln von Blechbearbeitungsmitteldaten mit Informationen zu dem Blechbearbeitungsmittel basierend auf dem Lesesignal; und
- einer Maschinenschnittstelle zum Ansteuern eines Maschinensystems der Blechbearbeitungsmaschine basierend auf den Blechbearbeitungsmitteldaten.

In einem weiteren Aspekt betrifft die vorliegende Erfindung ein System zum Bearbeiten von Blech, mit:
- einer Vorrichtung wie zuvor beschrieben;
- einer Blechbearbeitungsmaschine mit einem Maschinensystem;
- einem Blechbearbeitungsmittel mit einem damit verbundenen RFID-Transponder, insbesondere ein Breitbandschleifband mit einem auf einer Bearbeitungsseite abgewandten Rückseite aufgeklebten RFID-Transponder, einer Rotorbürste, einer Querbürste, einer Entgratwalze und/oder einer Entschlackungseinheit; und
- einem RFID-Leser zum Auslesen des RFID-Transponders, wenn sich das Blechbearbeitungsmittel an einer Blechbearbeitungsstation in der Blechbearbeitungsmaschine befindet.

In einem weiteren Aspekt betrifft die vorliegende Erfindung ein Blechbearbeitungsmittel zum Bearbeiten von Blech mit einem damit verbundenen RFID-Transponder zur Verwendung mit einer Vorrichtung wie zuvor beschrieben oder in einem System wie zuvor beschrieben.

Weitere Aspekte der Erfindung betreffen ein der Vorrichtung entsprechend ausgebildetes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das System, das Verfahren und das Computerprogrammprodukt entsprechend der für die Vorrichtung und das System in den abhängigen Ansprüchen beschriebenen Ausgestaltungen ausgeführt sein.

Erfindungsgemäß ist es vorgesehen, dass Blechbearbeitungsmittel an Bearbeitungsstationen in einer Blechbearbeitungsmaschine mit RFID-Transpondern ausgestattet werden. Diese RFID-Transponder werden mittels eines RFID-Lesers ausgelesen. Der RFID-Leser kann dabei insbesondere innerhalb der Blechbearbeitungsmaschine angeordnet sein oder auch an einer Stelle angeordnet sein, die ein Auslesen eines Blechbearbeitungsmittels an einer Blechbearbeitungsstation in der Blechbearbeitungsmaschine ermöglicht. Insbesondere ist es möglich, dass es sich bei dem Blechbearbeitungsmittel dabei um ein Schleifmittel handelt, mit dem ein Blech geschliffen werden kann.

Mittels der erfindungsgemäßen Vorrichtung wird ein Lesesignal des RFID-Lesers empfangen. Das Lesesignal kann insbesondere eine dem Blechbearbeitungsmittel zugeordnete ID-Nummer umfassen. Diese ID-Nummer kann beispielsweise bereits durch den Hersteller des Blechbearbeitungsmittels vergeben sein, sodass der Hersteller diesem Blechbearbeitungsmittel zugeordnete Informationen zur Verfügung stellen kann.

Basierend auf dem Lesesignal können Blechbearbeitungsmitteldaten, die dem Blechbearbeitungsmittel zugeordnet sind, ermittelt werden. Beispielsweise kann hierzu eine Datenbankabfrage oder auch durch ein Nachschlagen bzw. ein Ergänzen einer für dieses Blechbearbeitungsmittel zuvor aufgenommenen oder angelegten Information erfolgen. Ausgehend von den Blechbearbeitungsmitteldaten erfolgt eine Ansteuerung eines Maschinensystems der Blechbearbeitungsmaschine. Dieses Maschinensystem gibt dabei insbesondere Parameter für die Blechbearbeitung vor bzw. führt die Blechbearbeitung durch. Beispielsweise können ausgehend vom verwendeten Blechbearbeitungsmittel (Werkzeug) Abstände, Dauern, Kräfte, Ausrichtungen etc. automatisiert vorgegeben werden, um damit eine effiziente und möglichst optimierte Blechbearbeitung zu ermöglichen.

Im Gegensatz zu bisherigen Ansätzen ohne automatisierte Erfassung des Blechbearbeitungsmittels und Ansteuerung des Maschinensystems ermöglicht der erfindungsgemäße Ansatz eine höhere Effizienz und eine verbesserte Bearbeitung. Zum einen ist es möglich, dass der Einsatz des Blechbearbeitungsmittels optimiert wird, um einen möglichst geringen Verschleiß hervorzurufen und eine schnelle Verarbeitung zu erreichen. Zum anderen ist es möglich, die erreichte Qualität zu verbessern bzw. zu optimieren, da beispielsweise auf Erfahrungswerte für das spezifische Blechbearbeitungsmittel bzw. dessen Typ zurückgegriffen werden kann. Es wird beispielsweise möglich, für verschiedene Blechbearbeitungsmittel automatisiert deren Verhalten zu erfassen und darauf basierend die weitere Blechbearbeitung anzupassen. Zudem können Bedienfehler vermieden werden und auch unerfahrene Bediener mit der Maschinenführung betraut werden. Ein Einsatz ungeeigneter Werkzeuge bzw. Blechbearbeitungsmittel oder auch ein Einsatz von Blechbearbeitungsmitteln, deren Lebensdauer bereits überschritten ist, kann erkannt bzw. vermieden werden.

Die erfindungsgemäße Lösung ist dabei vorzugsweise so konzipiert, dass die Blechbearbeitungsmaschine auch unabhängig von der erfindungsgemäßen Vorrichtung betreibbar ist. Insoweit wird die Verfügbarkeit der Blechbearbeitungsmaschine nicht beeinträchtigt.

In einer bevorzugten Ausgestaltung ist die Auswerteeinheit zum Ermitteln eines Typs des Blechbearbeitungsmittels, einer Blechbearbeitungsstation, an der sich das Blechbearbeitungsmittel befindet, einer Körnung des Blechbearbeitungsmittels, einem vordefinierten möglichen Einsatzgebiet des Blechbearbeitungsmittels, einer Verschleißinformation zu einem Verschleiß des Blechbearbeitungsmittels und/oder einer bisherigen Betriebsdauer des Blechbearbeitungsmittels ausgebildet. Zusätzlich oder alternativ ist die Auswerteeinheit zum Ermitteln eines individuellen Parameters des Blechbearbeitungsmittels ausgebildet, der in einem zuvor durchgeführten Messvorgang ermittelt wurde, insbesondere einer Breite und/oder einer Dicke eines Breitbandschleifbands, das dem Blechbearbeitungsmittel entspricht. Durch die Ermittlung eines der oben genannten Parameter basierend auf dem Lesesignal können Zusatzinformationen bereitgestellt werden, die dann wiederum der Ansteuerung des Maschinensystems zugrunde gelegt werden können. In anderen Worten werden basierend auf den oben genannten Parametern also Einstellungen des Maschinensystems bei der Blechbearbeitung angepasst. Dabei können vordefinierte und über die Lebensdauer des Blechbearbeitungsmittels unveränderliche Informationen ermittelt werden oder auch individuelle, dem spezifischen Blechbearbeitungsmittel zugeordnete, Informationen erfasst bzw. aufgezeichnet werden.

Für die Ermittlung eines individuellen Parameters für das spezifische Blechbearbeitungsmittel kann ein separater Messvorgang bzw. Kalibriervorgang durchgeführt werden. Ausgehend von einem in diesem Kalibrier- oder Messvorgang erhaltenen Wert kann dann beispielsweise die Entwicklung dieses Werts aufgezeichnet werden, ggf. gestützt durch weitere Messvorgänge. Die Überwachung kann dann dazu eingesetzt werden, in effizienter Weise spezifische Informationen zu diesem bestimmten Blechbearbeitungsmittel aufzuzeichnen und zu verfolgen. Insbesondere bei einem Wechsel eines Blechbearbeitungsmittels kann durch das Laden von in einem Kalibriervorgang erhaltenen Werten bzw. Daten im Vergleich zu einer neuen Kalibration die Rüstzeit verkürzt werden. Der Kalibriervorgang kann dabei entweder außerhalb der Blechbearbeitungsmaschine auf einer entsprechenden Kalibrierstation oder innerhalb der Blechbearbeitungsmaschine durchgeführt werden.

In einer bevorzugten Ausgestaltung umfasst die Vorrichtung eine Datenbankanbindung zu einer Datenbank mit Informationen zu Blechbearbeitungsmitteln, insbesondere einer lokalen Datenbank ohne Internetanbindung. Die Auswerteeinheit ist zum Ermitteln von Blechbearbeitungsdaten basierend auf einem Datenbankabruf der Datenbank unter Berücksichtigung des Lesesignals ausgebildet. Zusätzlich oder alternativ ist die Auswerteeinheit zum Speichern von Blechbearbeitungsmitteldaten in der Datenbank ausgebildet. Durch eine Datenbankanbindung wird es ermöglicht, dass dem Blechbearbeitungsmittel zugegangene Informationen verfügbar gemacht werden. Die Datenbank könnte dabei beispielsweise durch einen Hersteller des Blechbearbeitungswerkzeugs oder auch durch einen Hersteller der Blechbearbeitungsmaschine befüllt werden und Informationen zu dem Blechbearbeitungsmittel selbst oder auch zu dessen Verhalten umfassen. Beispielsweise können Informationen zu einer Abnutzung oder Ähnliches hinterlegt sein. Durch einen Abruf der für eine ID eines RFID-Transponders hinterlegten Informationen in der Datenbank können diese Informationen zugänglich gemacht werden. Dabei kann es vorgesehen sein, dass in derselben Datenbank dann auch Blechbearbeitungsmitteldaten gespeichert werden. Insoweit können Blechbearbeitungsdaten auch nachträglich ermittelt werden, um diese dann für das spezifische Blechbearbeitungsmittel in der Datenbank zu hinterlegen. Beispielsweise kann in dieser Weise eine Betriebsdauer oder auch ein Umfang des Betriebs erfasst und gespeichert werden. Die Datenbank kann direkt an die erfindungsgemäße Vorrichtung angebunden bzw. mit dieser verbunden sein. Es ist aber auch möglich, dass über die Datenbankanbindung der Vorrichtung mit einer Datenbank kommuniziert wird, die an das Maschinensystem der Blechbearbeitungsmaschine angebunden bzw. in dieses integriert ist. In einer bevorzugten Ausgestaltung ist die Datenbankanbindung zum Kommunizieren mit einer Datenbank des Maschinensystems ausgebildet. Es ergibt sich eine effiziente Möglichkeit, den Betrieb der Blechbearbeitungsmaschine zu verbessern im Hinblick auf die Effizienz und die erreichten Ergebnisse.

In einer bevorzugten Ausgestaltung ist die Auswerteeinheit zum Ermitteln einer Verschleißinformation zu einem Verschleiß des Blechbearbeitungsmittels ausgebildet, insbesondere einer bisherigen Betriebsdauer des Blechbearbeitungsmittels. Die Auswerteeinheit ist zum Vergleichen der Verschleißinformation mit einem vordefinierten maximalen Verschleiß ausgebildet. Die Maschinenschnittstelle ist vorzugsweise zum Blockieren eines Bearbeitungsprozesses ausgebildet, wenn der maximale Verschleiß erreicht ist. Insbesondere ist es vorteilhaft, den Verschleiß des Blechbearbeitungsmittels zu überwachen. Dieser kann beispielsweise ausgehend von einer Betriebsdauer oder auch ausgehend von erfassten Kräften oder Anzahlen von durchgeführten Vorgängen erfasst werden. Die Verschleißinformation kann insoweit einen einzelnen Wert auf einer vordefinierten Skala (beispielsweise ein Prozentwert oder auch ein Punktewert) oder auch einen skalenlosen Wert umfassen. Ebenfalls ist es möglich, dass die Verschleißinformation eine mehrdimensionale Information zu verschiedenen einzelnen Parametern umfasst. Diese Verschleißinformation kann dann mit einer entsprechend vordefinierten Information (bspw. Schwellenwert) verglichen werden, die beispielsweise in vorangegangenen Messungen ermittelt wurde. Diese Messungen können beispielsweise durch einen Hersteller des Blechbearbeitungsmittels oder der Blechbearbeitungsmaschine durchgeführt worden sein. Wenn ein maximaler Verschleiß erreicht wird, kann eine Blockade ausgelöst werden, um ein schadhaftes Verhalten zu verhindern.

In einer bevorzugten Ausgestaltung ist die Auswerteeinheit zum Erkennen, ob das Blechbearbeitungsmittel ein bisher unbekanntes Blechbearbeitungsmittel ist, ausgebildet. Die Maschinenschnittstelle ist zum Initiieren einer Verschleißmessung ausgebildet, wenn das Blechbearbeitungsmittel ein bisher unbekanntes Blechbearbeitungsmittel ist. Es wird insoweit also erkannt, ob das Blechbearbeitungsmittel in der Blechbearbeitungsmaschine bereits zu einem vorherigen Zeitpunkt einmal benutzt wurde und damit dessen Lesesignal bzw. ID bereits zuvor einmal erfasst wurde. Wenn dies nicht der Fall ist und das Blechbearbeitungsmittel als unbekannt gewertet wird, kann eine Verschleißmessung ausgeführt werden, um einen initialen Zustand des Blechbearbeitungsmittels zu erfassen. Durch die Verschleißmessung kann beispielsweise eine Verschleißinformation ermittelt werden. Diese Information kann in einer entsprechenden Datenbank gespeichert werden. Insoweit wird eine effiziente Verwendung auch unterschiedlicher Blechbearbeitungsmittel ermöglicht. Abgespeicherte Daten aus der Datenbank können geladen/verwendet werden, um Nebenzeiten zu reduzieren.

In einer bevorzugten Ausgestaltung ist die RFID-Einheit zum Ansteuern des RFID-Lesers zum Auslösen eines RFID-Lesevorgangs ausgebildet, wenn ein Maschinenbediener über eine Maschinenbedienerschnittstelle der Blechbearbeitungsmaschine eine Zustimmung anzeigt und/oder eine Öffnung/Schließung eines Zugangs zu der Blechbearbeitungsstation detektiert wird, vorzugsweise basierend auf einem Sensorsignal eines Sensors der Blechbearbeitungsmaschine. Zusätzlich oder alternativ ist die RFID-Einheit zum Übermitteln eines Schreibsignals an den RFID-Lesers ausgebildet, um eine Verschleißinformation des Blechbearbeitungsmittels, insbesondere eine bisherige Betriebsdauer, auf dem RFID-Transponder zu speichern. Insofern kann ein Maschinenbediener, also eine Person, die die Maschine führt, eingebunden werden, um ein definiertes Auslesen des RFID-Transponders zu erreichen. Der Maschinenbediener gibt die relevanten Zeitpunkte des Lesevorgangs vor. Zudem ist es möglich, dass eine automatisierte Auslesung erfolgt, sobald ein Zugang zu einem in der Maschine befindlichen Blechbearbeitungswerkzeug bzw. einem Blechbearbeitungsmittel detektiert wird. Üblicherweise sind die Blechbearbeitungsmittel in der Blechbearbeitungsmaschine durch eine Klappe oder Tür von der Umwelt getrennt, um Unfälle zu vermeiden. Es wird detektiert, ob dieser Zugang geöffnet oder geschlossen wurde, also potentiell ein Wechsel des Blechbearbeitungsmittels erfolgt sein könnte, um dann einen Lesevorgang auszulösen. Es ist zusätzlich möglich, auch auf den RFID-Transponder eine Information zu speichern bzw. zu hinterlegen, die dann im weiteren Betrieb auch an anderen Maschinen oder auch an anderen Blechbearbeitungsstationen zur Verfügung stehen kann. Es wird also auf dem Blechbearbeitungsmittel selbst bzw. auf dessen RFID-Transponder eine Information hinterlegt, die zu einem späteren Zeitpunkt wieder ausgelesen werden kann.

In einer bevorzugten Ausgestaltung ist die Maschinenschnittstelle zum Empfangen einer Angabe über ein in das Maschinensystem geladenes Blechbearbeitungsmittel von dem Maschinensystem ausgebildet. Das in das Maschinensystem geladene Blechbearbeitungsmittel entspricht dabei insbesondere einem zu einem vorhergehenden Zeitpunkt in der Blechbearbeitungsmaschine vorhandenen Blechbearbeitungsmittel. Zusätzlich ist die Auswerteeinheit zum Ermitteln, ob das Blechbearbeitungsmittel dem in das Maschinensystem geladenen Blechbearbeitungsmittel entspricht, ausgebildet. Zusätzlich ist die Maschinenschnittstelle zum Ansteuern des Maschinensystems zum Blockieren eines Bearbeitungsprozesses ausgebildet, wenn das Bearbeitungsmittel nicht dem in das Maschinensystem geladenen Blechbearbeitungsmittel entspricht. Üblicherweise muss dem Maschinensystem eine Information zur Verfügung stehen, welches Werkzeug in der Maschine ist. Das Maschinensystem muss also ein bestimmtes Blechbearbeitungsmittel laden, um Parameter des Bearbeitungsvorgangs entsprechend anzupassen. Es kann dazu kommen, dass das geladene Blechbearbeitungsmittel nicht mehr dem tatsächlich in der Maschine befindlichen Blechbearbeitungsmittel entspricht. Erfindungsgemäß kann verglichen werden, ob ein geladenes Werkzeug einem tatsächlich gerüsteten Werkzeug entspricht. Wenn beispielsweise ein Maschinenbediener eine entsprechende Aktualisierung des Maschinensystems unterlässt, kann es hier zu einer Abweichung kommen. Durch das Auslesen des RFID-Transponders des aktuell in der Maschine befindlichen Blechbearbeitungsmittels kann diese Situation vermieden bzw. erkannt werden. Sobald ein Unterschied zwischen dem geladenen Blechbearbeitungsmittel und dem ausgelesenen, also tatsächlich gerüsteten Blechbearbeitungsmittel festgestellt wird, kann eine Aktion ausgelöst werden. Die Sicherheit der Maschine, des Maschinenbedieners und auch des bearbeiteten Werkstücks werden verbessert.

In einer bevorzugten Ausgestaltung ist die Maschinenschnittstelle zum Ansteuern einer Anzeigeeinheit der Blechbearbeitungsmaschine ausgebildet, um dem Maschinenbediener Informationen zum dem Blechbearbeitungsmittel und dem in das Maschinensystem geladenen Blechbearbeitungsmittel anzuzeigen, wenn das Blechbearbeitungsmittel nicht dem in das Maschinensystem geladenen Blechbearbeitungsmittel entspricht. Die Maschinenschnittstelle ist vorzugsweise zum Empfangen einer Bestätigung des Maschinenbedieners, dass das in das Maschinensystem geladene Blechbearbeitungsmittel durch das Blechbearbeitungsmittel ersetzt wurde, ausgebildet. Sobald festgestellt wird, dass das geladene Blechbearbeitungsmittel nicht dem aktuell gerüsteten Blechbearbeitungsmittel entspricht, kann also eine Warnung an den Maschinenbediener ausgegeben werden. Es kann dann beispielsweise auf eine Reaktion des Maschinenbedieners gewartet werden, um den Auswechselvorgang des Blechbearbeitungsmittels zu bestätigen bzw. zu verifizieren. Beschädigungen der Blechbearbeitungsmaschine oder des Werkstücks werden vermieden. Durch die Vermeidung von Ausschuss werden Kosten reduziert.

In einer bevorzugten Ausgestaltung ist die Auswerteeinheit zum Ermitteln einer Anzahl an Blechbearbeitungsmitteln an der Blechbearbeitungsstation und zum Vergleichen der ermittelten Anzahl mit einer vorbekannten Soll-Anzahl ausgebildet. Die Maschinenschnittstelle ist vorzugsweise zum Ansteuern des Maschinensystems zum Blockieren eines Bearbeitungsprozesses und/oder zum Ansteuern einer Anzeigeeinheit der Blechbearbeitungsmaschine ausgebildet, um Informationen zu der ermittelten Anzahl und der Soll-Anzahl auszugeben, wenn die ermittelte Anzahl und die Soll-Anzahl nicht übereinstimmen. Bei verschiedenen Blechbearbeitungsmaschinen sind an einer einzelnen Bearbeitungsstation mehrere Werkzeuge bzw. mehrere Blechbearbeitungsmittel vorgesehen. Sofern eines dieser Blechbearbeitungsmittel nicht gerüstet ist und fehlt, kann dies zu Maschinenschäden oder auch zu einer suboptimalen Bearbeitung führen. Um dies zu vermeiden, kann erfindungsgemäß ein entsprechender Abgleich der tatsächlichen Anzahl und der Soll-Anzahl erfolgen. Die Qualität wird weiter verbessert.

In einer bevorzugten Ausgestaltung ist die Maschinenschnittstelle zum Empfangen von Bearbeitungsdaten mit Informationen zu einem durchgeführten Blechbearbeitungsvorgang von der Blechbearbeitungsmaschine ausgebildet. Die Auswerteeinheit ist zum Ermitteln der Blechbearbeitungsmitteldaten basierend auf den Bearbeitungsdaten ausgebildet. Es kann für einen Vorgang also erfasst werden, welche Auswirkungen dieser auf das Blechbearbeitungsmittel hat. Die entsprechenden Daten können von der Maschine selbst empfangen werden. Die Auswerteeinheit kann dann basierend auf diesen Daten zur Bearbeitung (beispielsweise Bearbeitungsdauer, einwirkende Kräfte, gefahrene Winkelstellungen etc.) die Blechbearbeitungsmitteldaten ermitteln. Diese können dann beispielsweise wieder gespeichert werden. Es ergibt sich eine weitere Option, um zusätzliche Daten und Informationen zu dem spezifischen Blechbearbeitungsmittel verfügbar zu machen.

In einer bevorzugten Ausgestaltung ist die RFID-Einheit zum Empfangen des Lesesignals von einem an der Blechbearbeitungsmaschine angeordneten RFID-Leser, der sich vorzugsweise in einem Schaltschrank der Blechbearbeitungsmaschine befindet, ausgebildet. Zusätzlich oder alternativ ist die RFID-Einheit zum Empfangen des Lesesignals von einem RFID-Leser, der mit einer bis drei jeweils an Blechbearbeitungsstationen der Blechbearbeitungsmaschine angeordneten Antennen gekoppelt ist, ausgebildet. Der RFID-Leser kann in einem Schaltschrank angeordnet sein und mit einer oder mehreren Antennen verbunden sein, um damit möglichst wenig mechanischer Beanspruchung bzw. einem möglichst geringen Gefahrenpotential ausgesetzt zu sein. Es ergibt sich eine hohe Zuverlässigkeit.

In einer bevorzugten Ausgestaltung ist die Maschinenschnittstelle zum Ansteuern einer Anzeigeeinheit der Blechbearbeitungsmaschine ausgebildet, um Informationen zu dem Blechbearbeitungsmittel über eine Maschinenbedienerschnittstelle der Blechbearbeitungsmaschine an einen Maschinenbediener auszugeben. Eine Anzeigeeinheit kann beispielsweise ein Display der Blechbearbeitungsmaschine sein. Durch die Kommunikation der erfindungsgemäßen Vorrichtung über eine Anzeigeeinheit an der Blechbearbeitungsmaschine wird für den Bediener der Blechbearbeitungsmaschine eine einfache Interaktion mit der erfindungsgemäßen Vorrichtung ermöglicht. Das Fehlerpotential wird vermindert.

In einer bevorzugten Ausgestaltung ist die Vorrichtung in eine Blechbearbeitungsmaschine integriert, insbesondere in ein Maschinensystem der Blechbearbeitungsmaschine. Durch eine Integration der erfindungsgemäßen Vorrichtung in die Blechbearbeitungsmaschine wird eine Fehleranfälligkeit durch eine Kommunikation zwischen verschiedenen Systemen vermindert. Es wird eine effiziente Verwirklichung des erfindungsgemäßen Ansatzes erreicht.

In einer bevorzugten Ausgestaltung des erfindungsgemäßen Systems umfasst das Maschinensystem eine Blechbearbeitungsmittel-Auswahleinheit zum Ermitteln eines Vorschlags für ein einzusetzendes Blechbearbeitungsmittel basierend auf einer Vorgabe zum auszuführenden Bearbeitungsprozess. Die Maschinenschnittstelle ist zum Übermitteln der Blechbearbeitungsmitteldaten an die Blechbearbeitungsmittel-Auswahleinheit ausgebildet. Die Blechbearbeitungsmittel-Auswahleinheit ist zum Ermitteln des Vorschlags basierend auf den Blechbearbeitungsmitteldaten ausgearbeitet. Es kann insoweit direkt automatisiert ein Vorschlag für eine Einstellung für einen auszuführenden Bearbeitungsprozess ausgewählt werden. Die Bedienung der Blechbearbeitungsmaschine wird erheblich vereinfacht. Bearbeitungsfehler werden vermieden.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische Darstellung eines erfindungsgemäßen Systems zum Bearbeiten von Blech;
- Figur 2: eine schematische Darstellung einer erfindungsgemäßen Vorrichtung zum Erkennen eines Blechbearbeitungsmittels in einer Blechbearbeitungsmaschine;
- Figur 3: einen beispielhaften Ansatz zur Datenverarbeitung mittels eines erfindungsgemäßen Systems bzw. einer erfindungsgemäßen Vorrichtung;
- Figur 4: einen weiteren beispielhaften Ansatz zur Datenverarbeitung mittels eines erfindungsgemäßen Systems bzw. einer erfindungsgemäßen Vorrichtung;
- Figur 5: einen weiteren beispielhaften Ansatz zur Datenverarbeitung mittels eines erfindungsgemäßen Systems bzw. einer erfindungsgemäßen Vorrichtung;
- Figur 6: einen weiteren beispielhaften Ansatz zur Datenverarbeitung mittels eines erfindungsgemäßen Systems bzw. einer erfindungsgemäßen Vorrichtung;
- Figur 7: einen weiteren beispielhaften Ansatz zur Datenverarbeitung mittels eines erfindungsgemäßen Systems bzw. einer erfindungsgemäßen Vorrichtung;
- Figur 8: einen weiteren beispielhaften Ansatz zur Datenverarbeitung mittels eines erfindungsgemäßen Systems bzw. einer erfindungsgemäßen Vorrichtung;
- Figur 9: einen weiteren beispielhaften Ansatz zur Datenverarbeitung mittels eines erfindungsgemäßen Systems bzw. einer erfindungsgemäßen Vorrichtung;
- Figur 10: einen weiteren beispielhaften Ansatz zur Datenverarbeitung mittels eines erfindungsgemäßen Systems bzw. einer erfindungsgemäßen Vorrichtung;
- Figur 11: einen weiteren beispielhaften Ansatz zur Datenverarbeitung mittels eines erfindungsgemäßen Systems bzw. einer erfindungsgemäßen Vorrichtung; und
- Figur 12: eine schematische Darstellung eines erfindungsgemäßen Verfahrens.

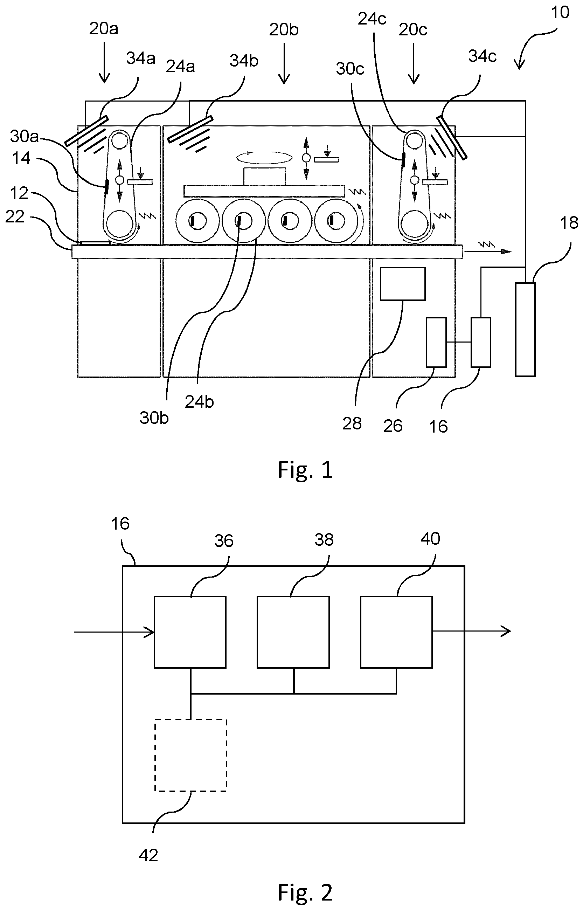

In Figur 1 ist schematisch ein erfindungsgemäßes System 10 zum Bearbeiten von Blech dargestellt. Das System umfasst eine Blechbearbeitungsmaschine 14, einen RFID-Leser 18 sowie eine Vorrichtung 16 zum Erkennen eines Blechbearbeitungsmittels in der Blechbearbeitungsmaschine 14. Die Blechbearbeitungsmaschine 14 ist im dargestellten Ausführungsbeispiel eine Maschine zum Bearbeiten von relativ dicken Blechteilen aus Stahl oder Edelstahl. Drei Bearbeitungsstationen 20a, 20b, 20c, die entlang eines durchgängigen Transportbands 22 in Durchlaufrichtung des Blechs 12 angeordnet sind. Das Blech 12 (Werkstück) wird nacheinander an den Blechbearbeitungsstationen 20a, 20b, 20c bearbeitet. Beispielsweise kann es sich bei der Blechbearbeitungsmaschine 14 um eine Entgratmaschine handeln.

Die erste Bearbeitungsstation 20a ist als Schleifbandaggregat ausgebildet, wobei als Blechbearbeitungsmittel 24a ein Schleifband vorgesehen ist, das endlos umläuft und von einem Elektromotor angetrieben wird. Die zweite Bearbeitungsstation 20b ist als sogenanntes Bürstenaggregat mit mehreren Schleifbürsten als Blechbearbeitungsmittel 24b ausgebildet. Von den Schleifbürsten rotieren beispielsweise einige in Mitlaufrichtung und einige in Gegenlaufrichtung um ihre horizontale Achse. Gleichzeitig ist es möglich, dass sich die Schleifbürsten um eine vertikale Achse drehen. Es ergibt sich insoweit eine Multirotations-Bewegung der Schleifbürsten. Die dritte Bearbeitungsstation 20c umfasst im dargestellten Ausführungsbeispiel ein weiteres Breitband-Schleifband als Blechbearbeitungsmittel 24c. Das zu bearbeitende Blech 12 wird auf das Transportband 22 aufgelegt und durchläuft die Blechbearbeitungsmaschine 14 von links nach rechts in der Darstellung. Zuerst wird das Blech mittels des ersten Schleifbandaggregats entgratet. Anschließend werden mittels des Bürstenaggregats die Kanten verrundet und die Oberfläche gebürstet. Zum Schluss wird mittels des Schleifbandaggregats an der dritten Blechbearbeitungsstation 20c die Oberfläche feingeschliffen und erhält dadurch ein Finish.

Die Blechbearbeitungsmaschine 14 umfasst zur Konfiguration und zur Einstellung des Verhaltens und des auszuführenden Bearbeitungsprozesses ein Maschinensystem 26, das insbesondere einer Maschinensteuerung entsprechen kann. In der dargestellten Ausführungsform umfasst die Blechbearbeitungsmaschine 14 zudem eine Anzeigeeinheit 28, die es einem Maschinenbediener erlaubt, Einstellungen vorzunehmen oder auch Informationen auszulesen. Üblicherweise gibt der Maschinenbediener über die Anzeigeeinheit 28 Einstellungen für das Maschinensystem 26 vor. Dazu kann die Anzeigeeinheit 28 beispielsweise ein Touchscreen-Display umfassen.

Erfindungsgemäß ist es vorgesehen, dass an den Blechbearbeitungsmitteln 24a, 24b, 24c jeweils RFID-Transponder 30a, 30b, 30c vorgesehen bzw. angebracht oder integriert sind, die mittels des RFID-Lesers 18 ausgelesen werden können. Hierzu ist im dargestellten Ausführungsbeispiel der RFID-Leser 18 mit insgesamt drei Antennen 34a, 34b, 34c verbunden, die jeweils an den Blechbearbeitungsstationen 20a, 20b, 20c angeordnet sind. Die RFID-Transponder 30a, 30b, 30c werden innerhalb der jeweiligen Blechbearbeitungsstation ausgelesen, wobei die Ausrichtung der verschiedenen Antennen 34a, 34b, 34c vorzugsweise so gewählt ist, dass lediglich RFID-Transponder innerhalb der einzelnen Bearbeitungsstationen ausgelesen werden können und es nicht zu einem Auslesen von RFID-Transpondern in benachbarten Blechbearbeitungsstationen kommen kann.

In Figur 2 ist schematisch eine erfindungsgemäße Vorrichtung 16 zum Erkennen eines Blechbearbeitungsmittels in einer Blechbearbeitungsmaschine dargestellt. Mittels der erfindungsgemäßen Vorrichtung 16 wird ein Blechbearbeitungsmittel 24a, 24b, 24c erkannt und darauf basierend eine Ansteuerung des Maschinensystems 26 vorgenommen. Die Vorrichtung umfasst eine RFID-Einheit 36, eine Auswerteeinheit 38, eine Maschinenschnittstelle 40 sowie eine optionale Datenbankanbindung 42. Die verschiedenen Einheiten können dabei teilweise oder vollständig in Soft- und/oder in Hardware umgesetzt sein. Insbesondere können die Einheiten als Prozessor, Prozessormodule oder auch als Software für einen Prozessor ausgebildet sein. Die Vorrichtung 16 kann beispielsweise in Form eines Zusatzgeräts für eine Blechbearbeitungsmaschine oder auch als Software für ein Maschinensystem einer Blechbearbeitungsmaschine ausgebildet sein. Beispielsweise kann die Vorrichtung 16 in Software implementiert sein, wobei die Software auf einem Maschinensystem einer Blechbearbeitungsmaschine ausgeführt wird. Ebenfalls ist es aber auch möglich, dass die Vorrichtung 16 als Zusatzgerät ausgebildet ist, das mit einem Maschinensystem, einer Blechbearbeitungsmaschine und einem RFID-Leser in Kommunikation steht. Beispielsweise können der RFID-Leser sowie die Vorrichtung 16 in einem Schaltschrank angeordnet sein.

Die RFID-Einheit 36 steht in Kommunikation mit dem RFID-Leser und ist dazu ausgebildet, ein Lesesignal zu empfangen. Das Lesesignal umfasst Informationen zu einem RFID-Transponder an einem Blechbearbeitungsmittel. Insbesondere kann das Lesesignal insoweit eine ID des RFID-Transponders umfassen.

Mittels der Auswerteeinheit 38 werden Blechbearbeitungsmitteldaten ermittelt. Hierzu dient das zuvor empfangene Lesesignal des RFID-Lesers als Grundlage. Beispielsweise kann die Auswerteeinheit 38 dazu eine Abfrage eines Speichers der Vorrichtung 16, der zuvor aufgezeichnete Daten umfasst, vornehmen. Ebenfalls ist es möglich, dass eine Datenbank abgefragt wird, die Informationen zu Blechbearbeitungsmitteln umfasst. Schlüssel für die Abfrage ist dabei beispielsweise die ID des erkannten Blechbearbeitungsmittels.

Die Maschinenschnittstelle 40 dient zur Kommunikation mit dem Maschinensystem der Blechbearbeitungsmaschine. Insbesondere wird basierend auf den zuvor ermittelten Blechbearbeitungsmitteldaten eine Ansteuerung des Maschinensystems vorgenommen. Beispielsweise können einzelne Funktionen der Blechbearbeitungsmaschine gesteuert werden (Vorgabe einer Bearbeitungsdauer, einer Kraft, einer Geschwindigkeit etc.). Ebenfalls ist es möglich, dass ein aktueller Prozess gestartet bzw. unterbrochen wird oder eine andere Reaktion ausgelöst wird.

Die (optionale) Datenbankanbindung 42 dient zur Kommunikation mit einer Datenbank, die extern oder intern angeordnet sein kann. Hierzu kann die Datenbankanbindung 42 beispielsweise einer Netzwerk- oder auch Internetanbindung entsprechen, über die eine Kommunikation mit einer entfernt angeordneten Datenbank hergestellt werden kann. Beispielsweise kann über eine Internetverbindung eine Datenbank des Herstellers der Blechbearbeitungsmaschine erfolgen. Die Datenbankanbindung 42 kann auch mit einer Datenbank des Maschinensystems in Kommunikation stehen bzw. diese ansprechen.

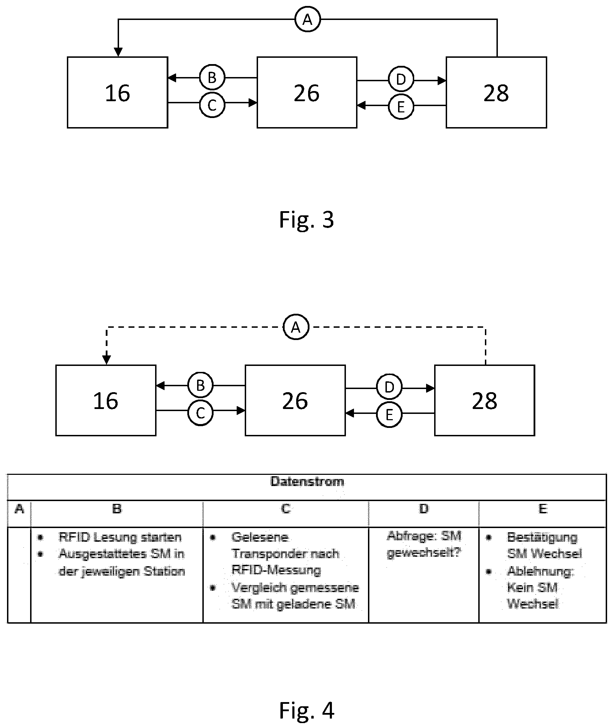

Das grundsätzliche Bedienkonzept des erfindungsgemäßen Ansatzes ist in Figur 3 dargestellt. Die erfindungsgemäße Vorrichtung 16 steht in Kommunikation mit dem Maschinensystem 26, das über die Anzeigeeinheit 28 eine Interaktion mit einem Maschinenbediener ermöglicht. Die Buchstaben A bis E kennzeichnen die verschiedenen möglichen Datenströme bzw. Informationsflüsse. Angedeutet ist, dass auch ein Datenstrom A zwischen Anzeigeeinheit 28 und erfindungsgemäßer Vorrichtung 16 vorgesehen sein kann. Ein solcher kann beispielsweise durch ein Ansprechen eines Displays durch die Vorrichtung 16 ermöglicht werden, gegebenenfalls über das Maschinensystem 26. Bei einer mittels einer Tür oder einer Klappe geschlossenen Bearbeitungsstation kann an dieser Tür bzw. Klappe ein Sensor angeordnet sein, um ein Öffnen/Schließen zu erkennen. Dieser Sensor kann beispielsweise mit dem Maschinensystem in Kommunikation stehen. Bei jedem Öffnen/Schließen kann vom Maschinensystem durch eine Kommunikation mit der erfindungsgemäßen Vorrichtung 16 eine Messung bzw. Erkennung der Blechbearbeitungsmittel in der Maschine initialisiert werden.

Wenn ein neu eingesetztes Blechbearbeitungsmittel beim Einsetzen in die Blechbearbeitungsmaschine erkannt wird, können beispielsweise durch die erfindungsgemäße Vorrichtung 16 ermittelte Informationen an das Maschinensystem 26 bereitgestellt werden. Angegeben werden kann beispielsweise, an welcher Blechbearbeitungsstation das Blechbearbeitungsmittel eingesetzt wurde. Ebenfalls kann angegeben werden, welcher Typ von Blechbearbeitungsmitteln betroffen ist und an welcher Blechbearbeitungsstation der Wechsel stattfand. Dabei ist es möglich, dass zum Initiieren des Auslesevorgangs eine Interaktion mit dem Maschinenbediener (beispielsweise über die Anzeigeeinheit 28) erfolgt. Der Maschinenbediener kann beispielsweise gefragt werden, ob eine RFID-Lesung ausgelöst werden soll.

In den Figuren 4 bis 11 sind weitere Möglichkeiten zur Verwendung und zum Einsatz des erfindungsgemäßen Ansatzes bzw. realisierbare Funktionen dargestellt. Gezeigt sind insbesondere Datenströme A bis E bzw. A bis G zwischen der Vorrichtung 16, dem Maschinensystem 26, der Anzeigeeinheit 28 bzw. dem Maschinenbediener und der Datenbank 44. Die Abkürzung SM steht in den Figuren 4 bis 11 für ein Schleifmittel. Die gezeigten Ansätze/Funktionen in den Figuren 4 bis 11 können in gleicher Weise aber auch für andere Blechbearbeitungsmittel eingesetzt werden.

In Figur 4 ist schematisch ein Ablauf einer Erkennung, ob das richtige Blechbearbeitungsmittel eingesetzt ist, dargestellt. Die erfindungsgemäße Vorrichtung 16 hat üblicherweise kein Gedächtnis, welches Blechbearbeitungsmittel zu einem vorigen Zeitpunkt eingesetzt war. Üblicherweise kann lediglich eine Momentaufnahme gemacht werden, welches Blechbearbeitungsmittel sich zum Messzeitpunkt in der Maschine befindet. Das letzte erkannte Blechbearbeitungsmittel bzw. das zu dem Zeitpunkt in der Blechbearbeitungsmaschine vorhanden sein sollende Blechbearbeitungsmittel ist im Maschinensystem 26 gespeichert. Die Vorrichtung 16 erhält also vom Maschinensystem 26 die Information, welches Blechbearbeitungsmittel in der Maschine sein sollte und vergleicht diese Information mit dem erkannten Blechbearbeitungsmittel. Der Vergleich findet nach jeder neuen RFID-Auslesung statt. Wenn das durch die erfindungsgemäße Vorrichtung 16 erkannte Blechbearbeitungsmittel nicht dem im Maschinensystem 26 hinterlegten Blechbearbeitungsmittel entspricht, kann eine Benachrichtigung auf der Anzeigeeinheit 28 angezeigt werden.

Durch die Benachrichtigung kann beispielsweise der Maschinenbediener aufgefordert werden, zu bestätigen, dass ein Wechsel des Blechbearbeitungsmittels stattgefunden hat. Hierzu kann dem Maschinenbediener beispielsweise das erkannte Blechbearbeitungsmittel mit dessen Parametern angezeigt werden. Der Maschinenbediener kann also überprüfen, ob das von der erfindungsgemäßen Vorrichtung erkannte Blechbearbeitungsmittel dem tatsächlich in der Maschine befindlichen Blechbearbeitungsmittel entspricht. Der Maschinenbediener kann dann bestätigen, dass ein Wechsel stattgefunden hat oder dies ablehnen. Im Fall, dass ein Wechsel nicht bestätigt wird, findet kein automatischer Wechsel statt. Wenn der Bediener hingegen den Wechsel bestätigt, findet ein automatisierter (systemseitiger) Bearbeitungsmittelwechsel statt. Das im Maschinensystem 26 hinterlegte Blechbearbeitungsmittel wird durch das erkannte Blechbearbeitungsmittel ersetzt.

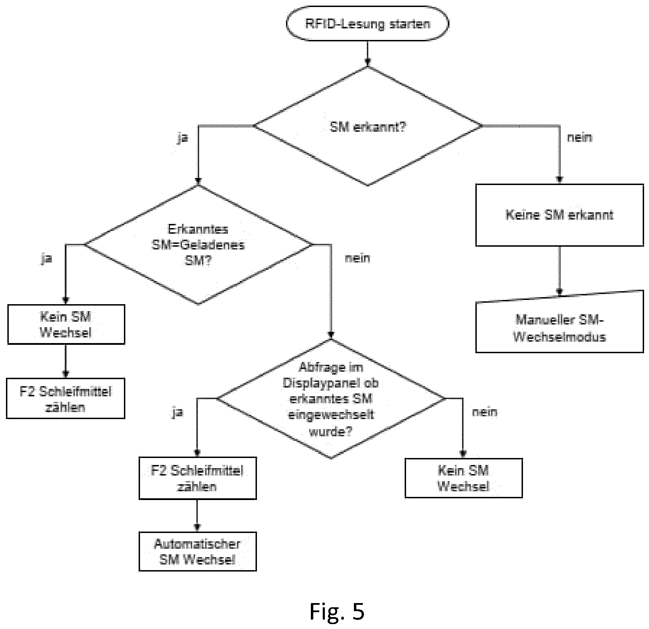

In Figur 5 ist in diesem Zusammenhang ein Ablauf dieses Ansatzes schematisch dargestellt. Überprüft wird, ob ein Wechsel eines Schleifmittels (als Blechbearbeitungsmittel) stattgefunden hat.

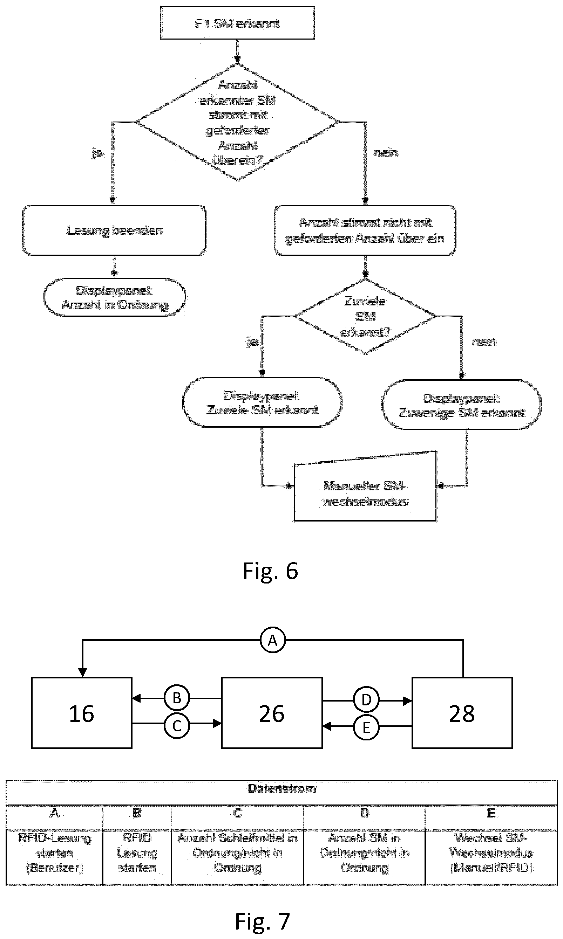

In Figur 6 ist ein Ansatz zum Zählen von Schleifmitteln in den jeweiligen Blechbearbeitungsstationen dargestellt. Mittels der erfindungsgemäßen Vorrichtung können die erkannten Blechbearbeitungsmittel gezählt werden und die vorhandene Anzahl mit einer geforderten Anzahl verglichen werden. Dies ist relevant, wenn beispielsweise in einer Blechbearbeitungsstation mehrere einzelne Blechbearbeitungsmittel eingesetzt werden. Durch die Erkennung können insbesondere drei Fälle unterschieden werden. Wenn mehr Blechbearbeitungsmittel erkannt werden als für die Blechbearbeitungsstation vorgesehen sind, kann eine entsprechende Warnung an einen Maschinenbediener ausgegeben werden. Dann kann dem Maschinenbediener beispielsweise zur Auswahl gestellt werden, ob die Messung wiederholt werden soll oder ob ein manueller Wechsel des Blechbearbeitungsmittels initiiert werden soll. Wenn weniger Transponder erkannt werden als für die Blechbearbeitungsstation vorgesehen, kann dem Maschinenbediener ebenfalls eine Information ausgegeben werden, die dies widerspiegelt. Das Erkennen einer zu geringen Anzahl von Blechbearbeitungsmitteln in einer Blechbearbeitungsstation lässt entweder darauf schließen, dass zu wenige Blechbearbeitungsmittel bestückt wurden. Alternativ kann auch ein defekter RFID-Transponder vorliegen. Zudem ist es möglich, dass eine Auslesung aufgrund von Verunreinigungen in der Blechbearbeitungsmaschine verhindert wird. Beispielsweise kann dem Maschinenbediener über die Anzeigeeinheit eine erneute Messung vorgeschlagen werden. Wenn die zweite Messung dann dasselbe Ergebnis ausgibt, kann der Maschinenbediener aufgefordert werden zu überprüfen, ob ein Blechbearbeitungsmittel fehlt oder nicht. Bei einer erfolgreichen Abgleichung der Anzahl der erkannten Blechbearbeitungsmittel mit der Anzahl an vorgesehenen Blechbearbeitungsmitteln kann dies ebenfalls angezeigt werden.

In Figur 7 ist eine Erkennung von Blechbearbeitungsmitteln illustriert. Beispielsweise gibt es Blechbearbeitungsstationen bzw. Blechbearbeitungsmaschinen, bei denen mehrere einzelne Blechbearbeitungsmittel bzw. ein mehrteiliges Blechbearbeitungsmittel vorhanden sein müssen, um die Blechbearbeitungsstation vollständig zu bestücken und die gewünschte Funktion zu erbringen (vgl. bspw. die Darstellung in Figur 1 mit dem mehrteiligen Blechbearbeitungsmittel 20b). Es kann sich insoweit um einen Satz (Set) an Blechbearbeitungsmitteln handeln. Ein solcher Satz kann vorteilhafterweise als Einheit angesehen werden. Nur wenn alle verschiedenen RFID-Transponder der Blechbearbeitungsmittel eines Satzes gelesen werden können, gilt die Einheit als komplett und vollständig. Wenn ein RFID-Transponder nicht gelesen werden kann, so kann der Satz die entsprechende Funktionalität nicht erfüllen. Sofern dies mittels der erfindungsgemäßen Vorrichtung erkannt wird, kann eine Blockade über die Maschinenschnittelle initiiert werden. Dabei kann der Satz beispielsweise nach einer ersten Verschleißmessung definiert werden und so lange als Set gelten, wie das Blechbearbeitungsmittel nicht gesperrt ist. Nach einer ersten Verschleißmessung können insoweit also die verschiedenen gelesenen RFID-Transponder als Satz in einer Datenbank hinterlegt werden.

Als weitere Funktion ist es grundsätzlich denkbar, dass das Maschinensystem eine Blechbearbeitungsmittel-Auswahleinheit umfasst, mittels der ein Vorschlag für ein einzusetzendes Blechbearbeitungsmittel automatisierter bereitgestellt werden kann. Durch eine Interaktion mit der erfindungsgemäßen Vorrichtung kann beispielsweise erreicht werden, dass nur in diesem Fall eine entsprechende Einstellung der Blechbearbeitungsmaschine vorgenommen werden kann, wenn das erkannte Blechbearbeitungsmittel auch dem vorgeschlagenen Blechbearbeitungsmittel entspricht. Zudem ist es auch möglich, dass mittels der erfindungsgemäßen Vorrichtung ein Verzeichnis erstellt wird, welche Blechbearbeitungsmittel verfügbar sind und wie viele Betriebsstunden diese bereits benutzt wurden (Indiz für Verschleißzustand). Es ist dann möglich, dass die Blechbearbeitungsmittel-Auswahleinheit diejenigen Blechbearbeitungsmittel vorschlägt, die bereits vorhanden und verfügbar sind.

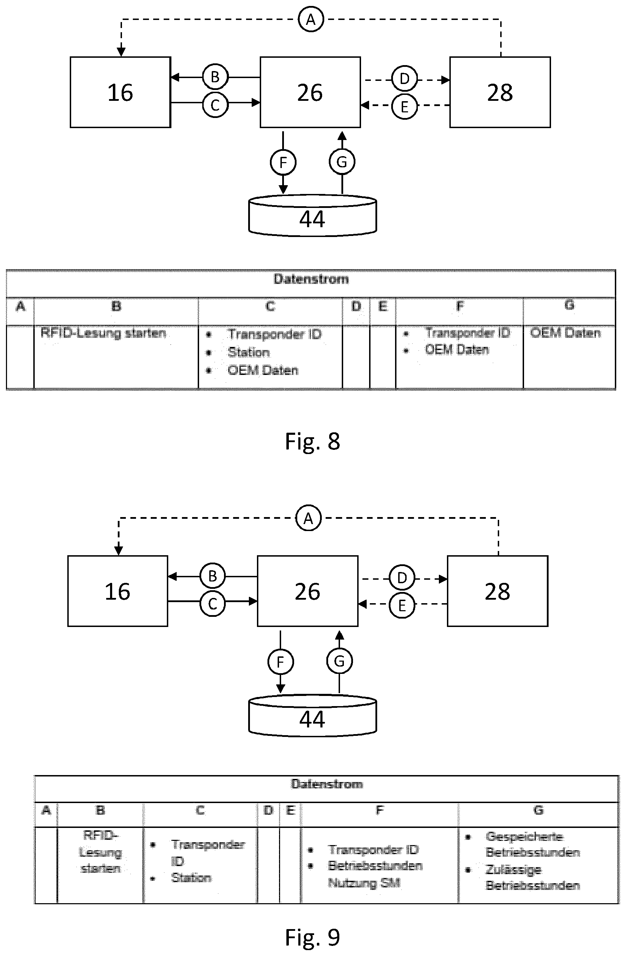

In Figur 8 ist schematisch ein Ansatz zum Speichern von Daten des Herstellers des Blechbearbeitungsmittels auf einem RFID-Transponder dargestellt. Verschiedene Blechbearbeitungsmittel können sich unterscheiden. Beispielsweise können sich Breitband-Schleifbänder in ihrer Länge unterscheiden aufgrund von Fertigungstoleranzen. Besonders bei präzisen Maschinen kann dies kritisch sein, da in der Blechbearbeitungsmaschine oft keine Möglichkeit besteht, eine derartige Differenz automatisch auszugleichen. Es ist möglich, einen Durchmesser eines Schleifbands durch einen Messtrichter zu ermitteln. Wenn diese Variable bekannt ist, kann diese durch das Maschinensystem ausgeglichen werden. Insoweit ist es grundsätzlich möglich, dass eine Länge und eine Dicke eines Breitband-Schleifbands manuell (bzw. individuell für dieses konkrete Blechbearbeitungsmittel) vor Auslieferung ermittelt und auf dem entsprechenden RFID-Transponder gespeichert werden. Beim Einsetzen des Blechbearbeitungsmittels in die Maschine kann dann auf diese Information zugegriffen werden und diese Information von der erfindungsgemäßen Vorrichtung 16 an das Maschinensystem 26 übertragen werden. Es ist dann möglich, dass die entsprechende Information in einer Datenbank 44 hinterlegt wird. Im dargestellten Ausführungsbeispiel steht die Datenbank 44 dabei in Kommunikation mit dem Maschinensystem (weitere Datenströme F und G). Es ist auch möglich, dass die Datenbank in direkter Kommunikation mit der erfindungsgemäßen Vorrichtung 16 steht. Es kann für ein Blechbearbeitungsmittel also eine diesem konkret bzw. individuell zugeordnete Information ermittelt, gespeichert und/oder verwendet werden.

In Figur 9 ist schematisch ein Ansatz zum Speichern einer Betriebsdauer des Blechbearbeitungsmittels auf dem jeweiligen RFID-Transponder oder in einer Datenbank 44 mit einer entsprechenden Transponder-ID als Zuordnung dargestellt. Die laufenden Betriebsstunden können also durch das Maschinensystem 26 ermittelt und an die erfindungsgemäße Vorrichtung 16 weitergegeben werden. Dies ermöglicht eine Ermittlung einer Anzahl an Betriebsstunden des Blechbearbeitungsmittels. Wenn sich ein Blechbearbeitungsmittel am Ende einer vorgesehenen Lebensdauer befindet, kann beispielsweise dem Maschinenbediener eine Benachrichtigung über die Anzeigeeinheit 28 ausgegeben werden. Mittels dieser Benachrichtigung kann der Maschinenbediener beispielsweise daran erinnert werden, ein neues Blechbearbeitungsmittel zu bestellen. Beispielsweise kann in die Ausgabe direkt ein QR-Code mit einem entsprechenden Bestell-Link integriert werden. Ebenfalls ist es möglich, direkt eine automatisierte Bestellung auszulösen. In diesem Zusammenhang ist es auch möglich, dass für einen Transponder beim Erreichen einer vordefinierten Lebensdauer eine Sperre hinterlegt wird und dieser nicht mehr verwendet werden kann. Dies ermöglicht ein Vermeiden von Gefahren für die Blechbearbeitungsmaschine oder auch den Bediener.

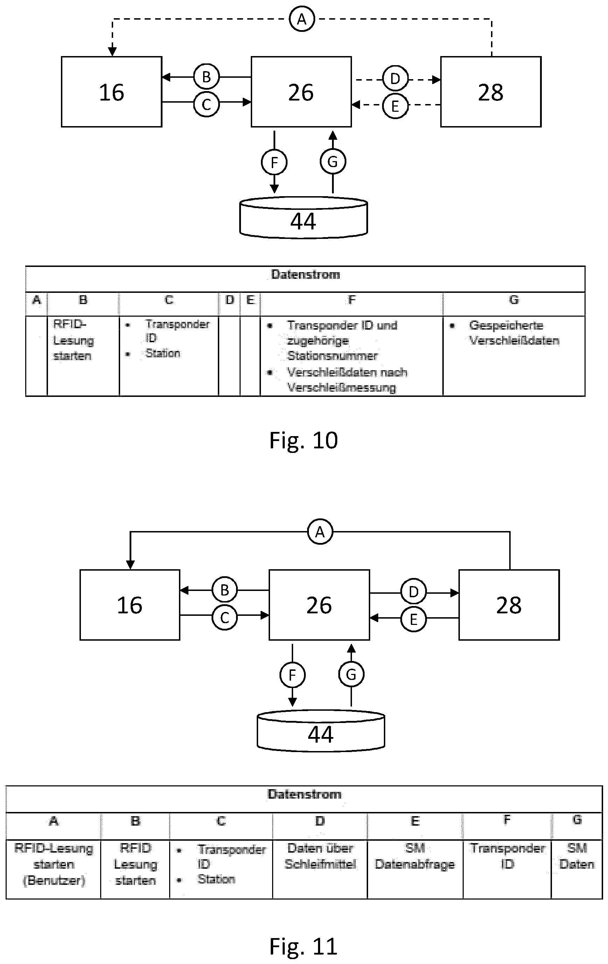

In Figur 10 ist ein weitere Ausführungsbeispiel dargestellt, bei dem Verschleißdaten, beispielsweise aus einer Verschleißmessung, auf einem RFID-Transponder oder in einer Datenbank mit einer entsprechenden Transponder-ID als Zuordnung gespeichert werden. Um eine Verschleißmesszeit zu verkürzen, sollen die Verschleißdaten aus dem Maschinensystem gespeichert werden. Dies ist insbesondere für Rotorbürsten als Blechbearbeitungsmittel interessant. Durch das Speichern von Verschleißdaten kann bei einem erneuten Bestücken des Blechbearbeitungsmittels eine deutlich verkürzte Verschleißmessung oder sogar gar keine Verschleißmessung notwendig sein.

In Figur 11 ist ein schematischer Ansatz zum Speichern von Daten über das Blechbearbeitungsmittel dargestellt. Beispielsweise kann ein Typ oder eine Körnung eines Schleifmittels gespeichert werden. Ein Blechbearbeitungsmittel kann insoweit eine Art elektronisches Typenschild erhalten. Die dem Blechbearbeitungsmittel zugeordneten und bekannten Daten können beim Auslesen für einen Benutzer verfügbar gemacht werden. Das Auslesen kann dabei in einer Blechbearbeitungsstation in der Blechbearbeitungsmaschine erfolgen. Ebenfalls ist es aber auch möglich, dass eine separate RFID-Antenne hierzu vorgesehen ist. Zum Beispiel kann auch eine geeignete Anwendungsart hinterlegt sein. Die angegebenen Daten können entweder direkt auf dem RFID-Transponder gespeichert werden oder auch aus einer Datenbank bezogen werden, die entweder direkt an die erfindungsgemäße Vorrichtung 16 angebunden ist oder auch über das Maschinensystem 26 verfügbar gemacht wird.

Es ist grundsätzlich möglich, dass Transponderdaten und die dazugehörigen Informationen in einer lokalen Datenbank gespeichert werden. In dieser Datenbank sind insoweit also die verschiedenen RFID-Transponder bzw. deren IDs verzeichnet, die für eine Blechbearbeitungsmaschine zugelassen sind. Außerdem werden diese RFID-Transponder nach einer vorher definierten Betriebszeit gesperrt. Diese lokale Datenbank kann beispielsweise bei einer Wartung der Blechbearbeitungsmaschine aktualisiert werden. Ebenfalls ist es auch möglich, eine entfernt angeordnete internetbasierte Datenbank zu verwenden.

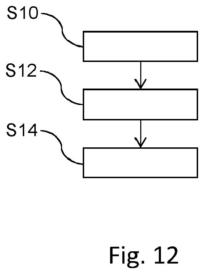

In Figur 12 ist schematisch ein erfindungsgemäßes Verfahren zum Erkennen eines Blechbearbeitungsmittels in einer Blechbearbeitungsmaschine dargestellt. Das Verfahren umfasst Schritte des Empfangens S10 eines Lesesignals, des Ermittelns S12 von Blechbearbeitungsmitteldaten und des Ansteuerns S14 eines Maschinensystems. Das Verfahren kann beispielsweise in Software umgesetzt sein, die auf einem Maschinensystem einer Blechbearbeitungsmaschine ausgeführt wird.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard-und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

## Patentansprüche

1. Vorrichtung (16) zum Erkennen eines Blechbearbeitungsmittels (24a, 24b, 24c) in einer Blechbearbeitungsmaschine (14), mit:
einer RFID-Einheit (36) zum Empfangen eines Lesesignals eines RFID-Lesers (18) mit Informationen zu einem RFID-Transponder (30a, 30b, 30c) an einem Blechbearbeitungsmittel an einer Blechbearbeitungsstation (20a, 20b, 20c) in der Blechbearbeitungsmaschine;
einer Auswerteeinheit (38) zum Ermitteln von Blechbearbeitungsmitteldaten mit Informationen zu dem Blechbearbeitungsmittel basierend auf dem Lesesignal; und
einer Maschinenschnittstelle (40) zum Ansteuern eines Maschinensystems (26) der Blechbearbeitungsmaschine basierend auf den Blechbearbeitungsmitteldaten.

2. Vorrichtung (16) nach Anspruch 1, wobei die Auswerteeinheit (38)
zum Ermitteln eines Typs des Blechbearbeitungsmittels (24a, 24b, 24c), einer Blechbearbeitungsstation (20a, 20b, 20c), an der sich das Blechbearbeitungsmittel befindet, einer Körnung des Blechbearbeitungsmittels, einem vordefinierten möglichen Einsatzgebiet des Blechbearbeitungsmittels, einer Verschleißinformation zu einem Verschleiß des Blechbearbeitungsmittels und/oder einer bisherigen Betriebsdauer des Blechbearbeitungsmittels ausgebildet ist; und/oder
zum Ermitteln eines individuellen Parameters des Blechbearbeitungsmittels ausgebildet ist, der in einem zuvor durchgeführten Messvorgang ermittelt wurde, insbesondere einer Breite und/oder einer Dicke eines Breitband-Schleifbands.

3. Vorrichtung (16) nach einem der vorstehenden Ansprüche, mit
einer Datenbankanbindung (42) zu einer Datenbank (44) mit Informationen zu Blechbearbeitungsmitteln (24a, 24b, 24c), insbesondere einer lokalen Datenbank ohne Internetanbindung, wobei
die Auswerteeinheit (38) zum Ermitteln von Blechbearbeitungsmitteldaten basierend auf einem Datenbankabruf der Datenbank unter Berücksichtigung des Lesesignals ausgebildet ist; und/oder
die Auswerteeinheit zum Speichern von Blechbearbeitungsmitteldaten in der Datenbank ausgebildet ist.

4. Vorrichtung (16) nach einem der vorstehenden Ansprüche, wobei
die Auswerteeinheit (38) zum Ermitteln einer Verschleißinformation zu einem Verschleiß des Blechbearbeitungsmittels (24a, 24b, 24c) ausgebildet ist, insbesondere einer bisherigen Betriebsdauer des Blechbearbeitungsmittels;
die Auswerteeinheit zum Vergleichen der Verschleißinformation mit einem vordefinierten maximalen Verschleiß ausgebildet ist; und
die Maschinenschnittstelle vorzugsweise zum Blockieren eines Bearbeitungsprozesses ausgebildet ist, wenn der maximale Verschleiß erreicht ist.

5. Vorrichtung (16) nach einem der vorstehenden Ansprüche, wobei
die Auswerteeinheit (38) zum Erkennen, ob das Blechbearbeitungsmittel (24a, 24b, 24c) ein bisher unbekanntes Blechbearbeitungsmittel ist, ausgebildet ist; und
die Maschinenschnittstelle (40) zum Initiieren einer Verschleißmessung ausgebildet ist, wenn das Blechbearbeitungsmittel ein bisher unbekanntes Blechbearbeitungsmittel ist.

6. Vorrichtung (16) nach einem der vorstehenden Ansprüche, wobei die RFID-Einheit (36)
zum Ansteuern des RFID-Lesers (18) zum Auslösen eines RFID-Lesevorgangs ausgebildet ist, wenn ein Maschinenbediener über eine Maschinenbedienerschnittstelle der Blechbearbeitungsmaschine (14) eine Zustimmung anzeigt und/oder eine Öffnung/Schließung eines Zugangs zu der Blechbearbeitungsstation (20a, 20b, 20c) detektiert wird, vorzugsweise basierend auf einem Sensorsignal eines Sensors der Blechbearbeitungsmaschine; und/oder
zum Übermitteln eines Schreibsignals an den RFID-Leser ausgebildet ist, um eine Verschleißinformation des Blechbearbeitungsmittels (24a, 24b, 24c), insbesondere eine bisherige Betriebsdauer, auf dem RFID-Transponder (30a, 30b, 30c) zu speichern.

7. Vorrichtung (16) nach einem der vorstehenden Ansprüche, wobei
die Maschinenschnittstelle (40) zum Empfangen einer Angabe über ein in das Maschinensystem (26) geladenes Blechbearbeitungsmittel (24a, 24b, 24c) von dem Maschinensystem ausgebildet ist, wobei das in das Maschinensystem geladene Blechbearbeitungsmittel insbesondere einem zu einem vorhergehenden Zeitpunkt in der Blechbearbeitungsmaschine (14) vorhandenen Blechbearbeitungsmittel entspricht;
die Auswerteeinheit (38) zum Ermitteln, ob das Blechbearbeitungsmittel dem in das Maschinensystem geladenen Blechbearbeitungsmittel entspricht, ausgebildet ist; und
die Maschinenschnittstelle zum Ansteuern des Maschinensystems zum Blockieren eines Bearbeitungsprozesses ausgebildet ist, wenn das Blechbearbeitungsmittel nicht dem in das Maschinensystem geladenen Blechbearbeitungsmittel entspricht.

8. Vorrichtung (16) nach Anspruch 7, wobei die Maschinenschnittstelle (40)
zum Ansteuern einer Anzeigeeinheit (28) der Blechbearbeitungsmaschine (14) ausgebildet ist, um dem Maschinenbediener Informationen zu dem Blechbearbeitungsmittel (24a, 24b, 24c) und dem in das Maschinensystem (26) geladenen Blechbearbeitungsmittel anzuzeigen, wenn das Blechbearbeitungsmittel nicht dem in das Maschinensystem geladenen Blechbearbeitungsmittel entspricht; und
vorzugsweise zum Empfangen einer Bestätigung des Maschinenbedieners, dass das in das Maschinensystem geladene Blechbearbeitungsmittel durch das Blechbearbeitungsmittel ersetzt wurde, ausgebildet ist.

9. Vorrichtung (16) nach einem der vorstehenden Ansprüche, wobei
die Auswerteeinheit (38) zum Ermitteln einer Anzahl an Blechbearbeitungsmitteln (24a, 24b, 24c) an der Blechbearbeitungsstation (20a, 20b, 20c) und zum Vergleichen der ermittelten Anzahl mit einer vorbekannten Soll-Anzahl ausgebildet ist; und
die Maschinenschnittstelle (40) vorzugsweise zum Ansteuern des Maschinensystems (26) zum Blockieren eines Bearbeitungsprozesses und/oder zum Ansteuern einer Anzeigeeinheit (28) der Blechbearbeitungsmaschine (14) ausgebildet ist, um Informationen zu der ermittelten Anzahl und der Soll-Anzahl auszugeben, wenn die ermittelte Anzahl und die Soll-Anzahl nicht übereinstimmen.

10. Vorrichtung (16) nach einem der vorstehenden Ansprüche, wobei
die Maschinenschnittstelle (40) zum Empfangen von Bearbeitungsdaten mit Informationen zu einem durchgeführten Blechbearbeitungsvorgang von der Blechbearbeitungsmaschine (14) ausgebildet ist; und
die Auswerteeinheit (38) zum Ermitteln der Blechbearbeitungsmitteldaten basierend auf den Bearbeitungsdaten ausgebildet ist.

11. System (10) zum Bearbeiten von Blech (12), mit:
einer Vorrichtung (16) nach einem der vorstehenden Ansprüche;
einer Blechbearbeitungsmaschine (14) mit einem Maschinensystem (26);
einem Blechbearbeitungsmittel (24a, 24b, 24c) mit einem damit verbundenen RFID-Transponder (30a, 30b, 30c), insbesondere ein Breitband-Schleifband mit einem auf einer Bearbeitungsseite abgewandten Rückseite aufgeklebten RFID-Transponder, einer Rotorbürste, einer Querbürste, einer Entgratwalze und/oder einer Entschlackungseinheit; und
einem RFID-Leser (18) zum Auslesen des RFID-Transponders, wenn sich das Blechbearbeitungsmittel an einer Blechbearbeitungsstation (20a, 20b, 20c) in der Blechbearbeitungsmaschine befindet.

12. System (10) nach Anspruch 11, wobei
das Maschinensystem (26) eine Blechbearbeitungsmittel-Auswahleinheit zum Ermitteln eines Vorschlags für ein einzusetzendes Blechbearbeitungsmittel (24a, 24b, 24c) basierend auf einer Vorgabe zum auszuführenden Bearbeitungsprozess umfasst;
die Maschinenschnittstelle (40) zum Übermitteln der Blechbearbeitungsmitteldaten an die Blechbearbeitungsmittel-Auswahleinheit ausgebildet ist; und
die Blechbearbeitungsmittel-Auswahleinheit zum Ermitteln des Vorschlags basierend auf den Blechbearbeitungsmitteldaten ausgebildet ist.

13. Blechbearbeitungsmittel (24a, 24b, 24c) zum Bearbeiten von Blech (12) mit einem damit verbundenen RFID-Transponder (30a, 30b, 30c) zur Verwendung mit einer Vorrichtung (16) nach einem der Ansprüche 1 bis 10 oder in einem System (10) nach einem der Ansprüche 11 und 12.

14. Verfahren zum Erkennen eines Blechbearbeitungsmittels (24a, 24b, 24c) in einer Blechbearbeitungsmaschine (14), mit den Schritten:
Empfangen (S10) eines Lesesignals eines RFID-Lesers (18) mit Informationen zu einem RFID-Transponder (30a, 30b, 30c) an einem Blechbearbeitungsmittel an einer Blechbearbeitungsstation in der Blechbearbeitungsmaschine;
Ermitteln (S12) von Blechbearbeitungsmitteldaten mit Informationen zu dem Blechbearbeitungsmittel basierend auf dem Lesesignal; und
Ansteuern (S14) eines Maschinensystems (26) der Blechbearbeitungsmaschine basierend auf den Blechbearbeitungsmitteldaten.

15. Computerprogrammprodukt mit Programmcode zum Ausführen der Schritte des Verfahrens nach Anspruch 14, wenn der Programmcode auf einem Computer ausgeführt wird.
